# EUROPEAN PATENT APPLICATION

(11) **EP 4 477 074 A1**
(43) Date of publication of application: **18.12.2024**
(21) Application number: 23216074.7
(22) Date of filing: 12.12.2023
(51) Int. Cl.: A01K 1/01

(54) **SIFTING LITTER BOX**

(30) Priority: 12.06.2023 US 202318208829
(71) Applicant: Taylor JR, Kenneth Lewis, Dry Ridge, KY 41035 (US)
(72) Inventor: Taylor JR, Kenneth Lewis, Dry Ridge, KY 41035 (US)
(74) Representative: Evens, Paul Jonathan

(57) **Abstract**

A tiered detachable sieving litter box (1), platform (4, 5), and removable clean sifted litter container are utilized to more efficiently separate waste than conventional litter boxes. The sieving litter box (1) is elevated above the clean sifted litter container on the platform (4, 5) and rotates upon a pivot point (3) on the platform (4, 5) when lifted by hand from the opposing side. The litter then pours through slots built into the side of the litter box (1) sifting the waste and allowing clean litter to flow into the clean sifted container staged below the platform (4, 5). Waste remaining in the empty litter box (1) can be disposed of by detaching the litter box (1) from the platform (4, 5). Once the litter box (1) is returned to the top of the platform (4, 5) empty, sifted clean litter from the clean sifter litter container can be poured back into the litter box (1) by picking up the clean sifted litter container and pouring it into the litter box (1). The clean sifted litter container is then placed back under the platform (4, 5) to reuse.

## Description

The drawings and descriptions of said drawings wherein are outlined in this section to define the function and purpose of this invention. These drawings and descriptions are not to limit the scope of the present invention.

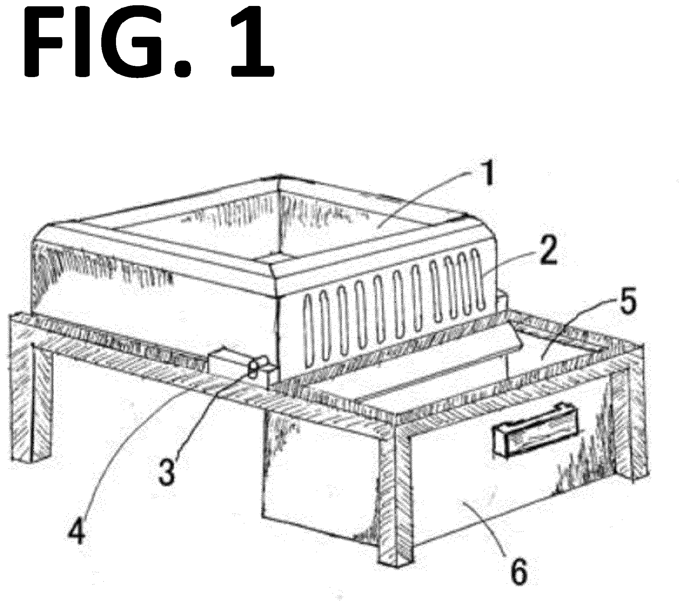

The purpose of this present invention is to minimize the amount of time needed to separate animal waste from litter within a litter box by using means that do not require automated mechanical assistance, nor any type of scoop. Typically, even if the scoop to remove waste is built into a separate process other than a hand scoop, the waste removal is limited to the size and shape of the scoop. This present invention innovates the sifting process by integrating sifting slots (2) - FIG. 1 in the side of the litter box so that the size of the scoop is not limited smaller than the box itself. Furthermore, the size of the sifted clean litter container is calculated such that it can hold the entire contents of litter within the litter box.

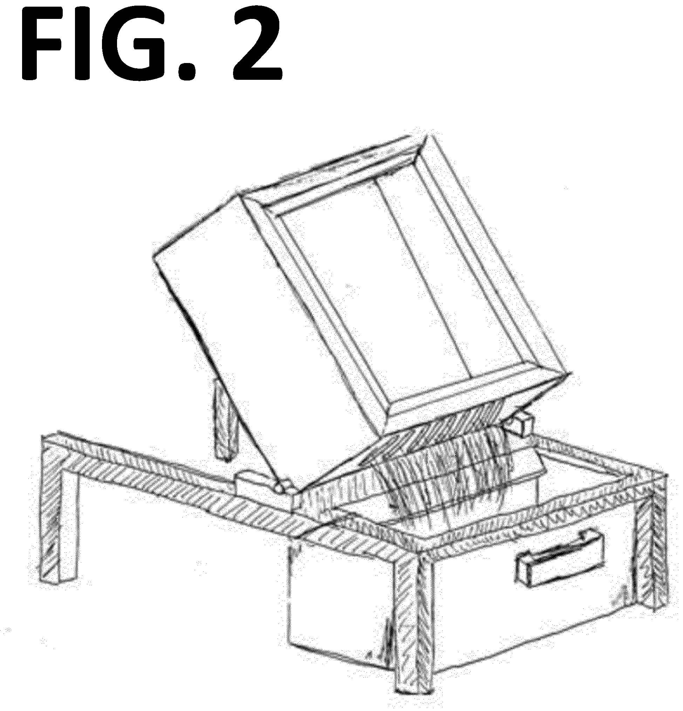

In reference to FIG. 1 In the process of sifting pet waste from the litter contained in the litter box (1), the side of the litter box opposing the sifting slots (2) is lifted until the litter and waste mixture slides towards the sifting slots. The litter box (1). will pivot along a pivot point (3) created between the litter box and the platform (4). Clean litter will then pass through the sifting slots then passing through a hole within the platform (5) and enter the sifted clean litter container (6). Note: this design shows the litter passing through a hole, but variations of the design would allow the litter to in any way from above the platform to below the platform. FIG. 2 shows this process described above.

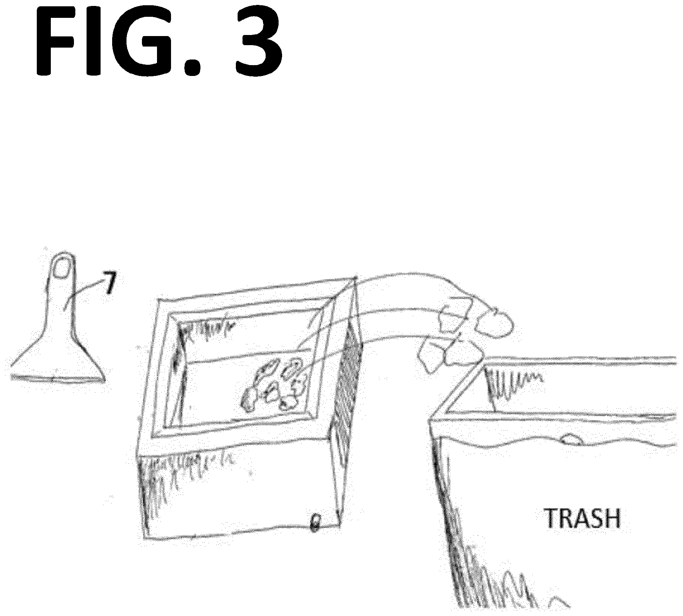

Once the litter has passed from the litter box (1) into the sifted clean litter container (6) the pet waste remains inside the litter box (1) this litter box full of pet waste can be easily removed by simply lifting it from the pivot point (3). Once lifted, the litter box can be taken to the trash and dumped in to empty the waste. As with any cat litter box, tough waste that has stuck to the bottom of the box may need to be removed by using a scraper (7) FIG. 3. When all the waste has been removed the empty litter box (1) can be placed back onto the pivot nests on the platform.

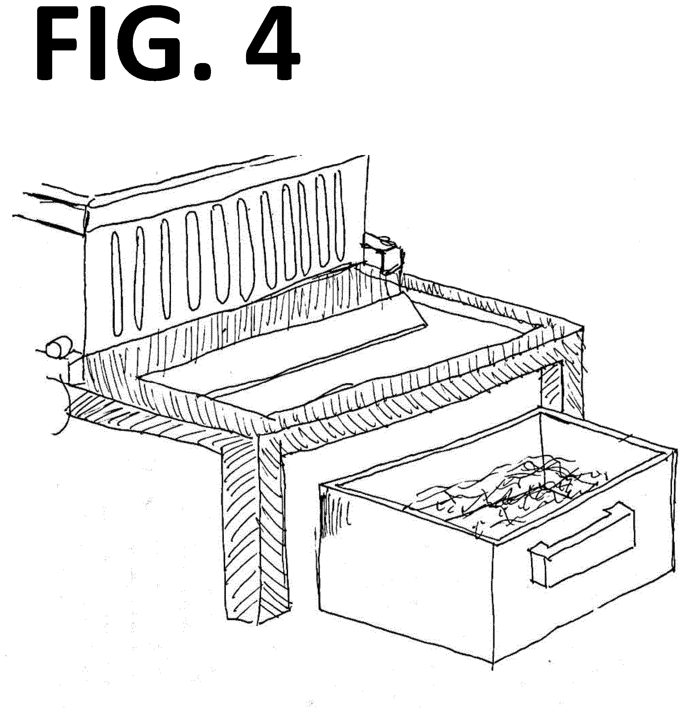

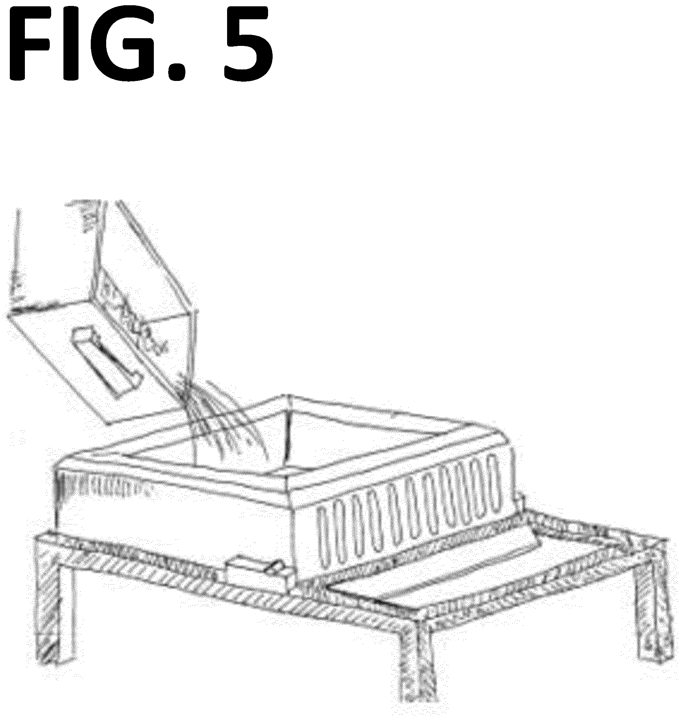

Next the sifted clean litter container (6) can be pulled out from underneath the platform FIG. 4. This sifted clean litter container contains the sifted clean litter from the previous steps. This container can now be taken and dumped into the litter box (1) to replenish the litter in the litter box. This process is seen in FIG. 5. After dumping the litter into the litter box, the sifted clean litter container (6) can be placed underneath the platform (4) to prepare the litter box assembly for re-use.

## Claims

1. A sifting litter box containing in combination:
a. Detachable litter box comprising
i. Three continuously joined sides that meet and connect to the bottom of the box.
ii. One vertically planer side containing sifting slots.
iii. The side from claim 1.a.ii may be inserted as a separate piece or manufactured as a completed connected piece to the box in claim 1.a.i.
iv. A pivot point through means of a geometrical feature on the two
v. vertical sides adjacent to the side mentioned in claim 1.a.ii.
b. A platform comprised
i. legs to elevate the litter box.
ii. A surface for the litter box in claim 1.a to rest upon
iii. Geometrical features to provide the pivot point for the detail described in claim 1.a.iv
iv. A hole for litter to pass from the top of the platform to below the platform.
c. A sifted clean litter container comprised.
i. Means to connect the claim 1.c to claim 1.b as to allow separation easily.

2. The litter box of claim 1.a rests on the platform of the litter box of claim 1.b

3. The litter box of claim 1.a may utilize accessories such as lids.

4. The litter box of claim 1.a may utilize accessories such as walk through doors.

5. The litter box of claim 1.a may utilize accessories such as wall extensions to reduce the amount of litter spilled or to give the occupying pet privacy.

6. The litter box of claim 1.a may utilize accessories such as access ramps to allow the pet easier access to the litter box.

7. The litter box of claim 1.a may have slots in any direction to sift the litter most effectively.
